# EUROPÄISCHE PATENTANMELDUNG

(11) **EP 3 822 064 A1**
(43) Veröffentlichungstag der Anmeldung: **19.05.2021**
(21) Anmeldenummer: 20020517.7
(22) Anmeldetag: 10.11.2020
(51) Int. Cl.: B29C 70/02, B29C 43/14, B65D 19/00, B29L 31/00, B29K 101/10, B29K 105/06, B29C 43/02, B29C 43/34, B29C 43/36, B29C 43/52, B29K 105/26

(54) **LADUNGSTRÄGER UND VERFAHREN ZU SEINER HERSTELLUNG**

(30) Priorität: 13.11.2019 DE 202019004661 U
(71) Anmelder: Logistics arts Production GmbH, 72213 Altensteig (DE)
(72) Erfinder: Lutz, Willy, 78727 Oberndorf / N. (DE)

(57) **Zusammenfassung**

Ladungsträger und Verfahren zum Herstellen eines Ladungsträgers, der im wesentlichen Kompositmaterial mit Reststoffen, härtbarem Bindemittel und ggf. Fasern aufweist, erhältlich durch Herstellung einer Mischung (Fig. 2, Pos. 3) von Reststoffen, Bindemittelpartikeln und gegebenenfalls Fasern in einem Mischer und Einbringen der so hergestellten Mischung (Fig. 2, Pos. 3) in eine mehrteilige geschlossene Form (Fig. 1 und Fig. 2, Pos 1 und 2) mit einem Unterwerkzeug (Fig. 1 und Fig. 2 und Fig. 3 , Pos. 1) und mindestens einem Oberwerkzeug (Fig. 1 und Fig. 2 , Pos. 2) und Härten der Mischung (Fig. 2, Pos. 3) in der geschlossenen Form (Fig. 1 und Fig. 2, Pos 1 und 2) durch Erwärmen und/oder Pressen unter Härten des Bindemittels unter Verbinden der Mischungsbestandteile, Abkühlenlassen und Entformen des Komposit-Ladungsträgers.

## Beschreibung

Die Erfindung betrifft einen Ladungsträger, der z.B. eine Palette, eine Kiste oder Bestandteil derselben und Traghilfe sein kann, sowie ein Verfahren zu seiner Herstellung. besteht.

Ladungsträger sind für die Logistik unersetzlich und bekannt. Dabei ist zu unterscheiden zwischen Einmal-Ladungsträgern und mehrfach verwendbaren Ladungsträgern, auch solche aus Reststoffen. So sind bspw. Papp-Paletten oder Preßspanpaletten, aber auch Flaschenträger erhältlich. Diese sind jedoch durch einfachstes Pressen bzw. Formen aus nur wenigen Materialien produziert, u.a. deshalb, da sie eine konstante Ausgangsmaterialqualität benötigen. Aufgrund der Abfallentsorgung ist es erwünscht, Reststoffe - auch aus Einmal-Ladungsträgern - wiederzuverwenden.

Es ist daher Aufgabe der Erfindung, einen Ladungsträger und ein Verfahren zu seiner Herstellung zu schaffen, der auch Recyclingmaterial aufweisen kann. Dies erfolgt in Anbetracht des Abfallproblems und dem Wunsch nach mehr Recycling.

Die Aufgabe wird erfindungsgemäß durch Ladungsträger nach Anspruch 1 sowie ein Verfahren zu seiner Herstellung nach Anspruch 8 gelöst. Vorteilhafte Weiterbildungen ergeben sich aus den abhängigen Ansprüchen.

Die erfindungsgemäßen Ladungsträger sind im Wesentlichen aus einem Komposit Material hergestellt, das Mischungen von Reststoffen, härtbarem Bindemittel und ggf. Fasern aufweist; wobei Mischen von Reststoffen, Bindemittelpartikeln und gegebenenfalls Fasern in einem Mischer; Einbringen der so hergestellten Ladungsträger-Mischung in eine mehrteilige Form mit Unterwerkzeug und einem ersten Oberwerkzeug; Schließen der Form mit einem weiteren Oberwerkzeug unter Pressen der Mischung auf dem Unterwerkzeug, ggf. Erwärmen der Form - zum Härten des Bindemittels und Verbinden der Mischungsbestandteile, Abkühlenlassen und Entformen des Ladungsträgers.

Der Ladungsträger kann bspw. eine Palette, Kistenbestandteil oder Traghilfe (z.B. Getränkekasten) sein, wie er bspw. in der DIN 30781 definiert ist, also ein tragendes Mittel zur Zusammenfassung von Gütern zu einer Ladeeinheit. Zu den Ladungsträgern gehören insbesondere die tragenden Transporthilfsmittel Palette, Container und auch Fahrzeug(teile) Sie erleichtern den Umschlag der Ladeeinheiten und fördern so die Effizienz und die Geschwindigkeit der Transportkette. Im Zusammenhang mit der Erfindung wird als Ladungsträger auch ein Teil eines Ladungsträgers bezeichnet.

Die zu seiner Herstellung verwendete Form weist ein Unterwerkzeug (Fig. 1 und Fig. 2 und Fig. 3 , Pos. 1) und mindestens ein Oberwerkzeug (Fig. 1 und Fig. 2, Pos. 2) und (Fig. 3, Pos. 10) sowie mindestens eine Einblasöffnung auf.

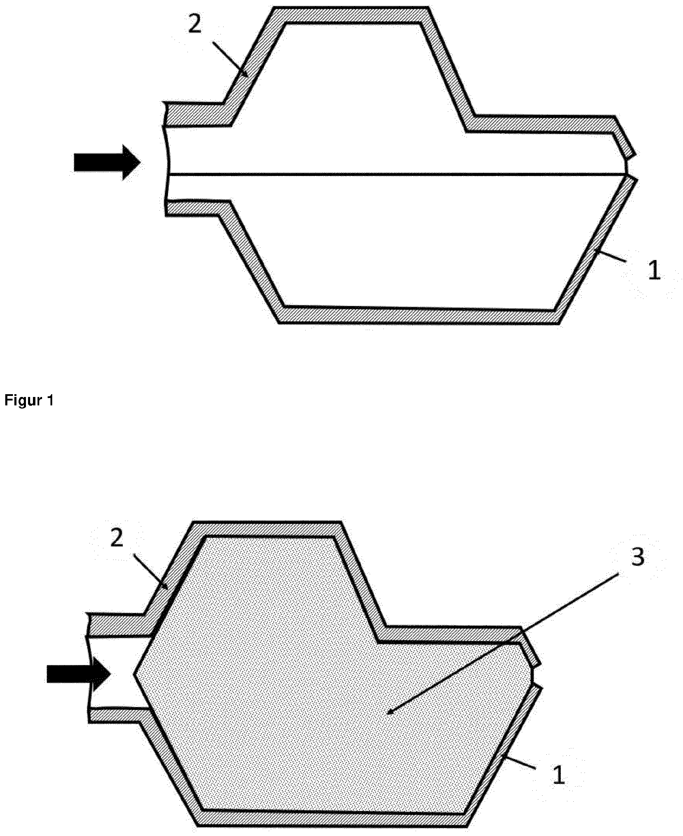

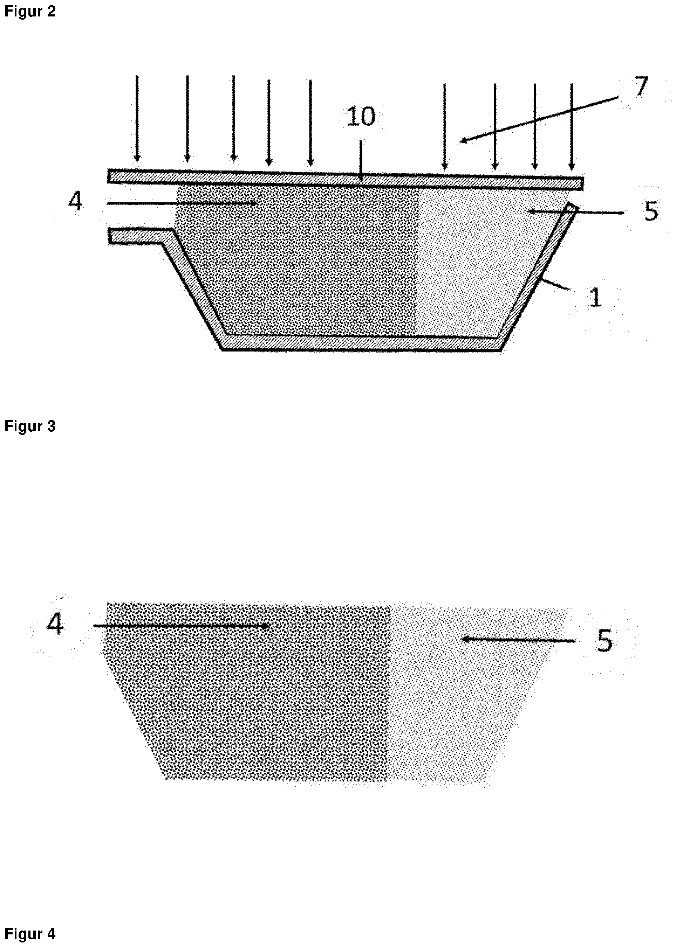

Die zu härtende Mischung wird bei einer Ausführungsform mit unterschiedlich verdichteten Ladungsträger-Abschnitten vor dem Pressen ungleichmäßig in die Form nach einem vorherbestimmten Muster je nach zu erreichendem Verdichtungsgrad eingebracht, wobei die zu härtende Mischung (Fig. 2, Pos. 3) nach der Einbringung in die Form mit einem ersten Oberwerkzeug durch Pressen und ggf. Erwärmen mit einem zweiten Oberwerkzeug (Fig. 3, Pos 10) in die endgültige Form gebracht wird und dadurch vorherbestimmte Verdichtungsgrade mit teils höher verdichtetem Material (Fig. 3 und Fig. 4 , Pos. 4) und weniger verdichtetem Material (Fig. 3 und Fig. 4 , Pos. 5), je nach Abweichung der Form des ersten Oberwerkzeugs (Fig. 1 und Fig. 2 , Pos. 2) von der Form des zweiten Oberwerkzeugs 10, vorliegen.

Eine Ausführungsform eines vollständig biologisch abbaubaren Ladungsträgers, der recyclingfähig ist, kann Reststoffe , wie Zellulose, Naturfasern, wie Hanf, Leinen, Ramie, Holzschlifffasern, Fasern von Gräsern und natürliche Bindemittel oder Ladungsträgerreste aufweisen; bei nicht biologisch abbaubaren, aber recyclingfähigen erfindungsgemäßen Ladungsträgern können auch Schnitzel aus Verbund-Verpackungsmaterialien (z.B. Tetra Pak®), bedruckte Papier- und Pappreste, auch Altpapierreste sowie synthetische Bindemittel im Ladungsträger verarbeitet sein.

Das (wärme)härtbare Bindemittel des Ladungsträgers kann ausgewählt sein aus Duroplasten, ZweikomponentenBindemitteln und natürlichen aushärtenden Bindemitteln, wie Stärke, Eiweiße, Chitin, Harze oder Gummi. Es können auch Bindemittel auf Silicium Basis, wie Silikon Bindemittel und Silikate eingesetzt werden.

Das erfindungsgemäße Verfahren zum Herstellen eines Ladungsträgers beinhaltet die folgenden Schritte:
- Einblasen von Bindemittel und zerkleinertem Material in eine mehrteilige Form mit wechselbarem Oberwerkzeug; wobei ein Mehrschritt-Befüllen mit unterschiedlichen Oberwerkzeugen möglich ist,
- Schließen der Form über dem Werkzeug;
- Aufbringen von Pressdruck auf das in der Endform-Form aus Unterwerkzeug und Endform-Oberwerkzeug befindliche Material, ggf. unter Erwärmen (auch durch heißes Gas, wie Wasserdampf), unter Härten des Bindemittels und Verbinden der Mischungsbestandteile;
Abkühlen und Entformen des Ladungsträgers.

Bei einer weiteren Ausführungsform des Verfahrens wird das Einbringen von Reststoffen, ggf. Fasern und Bindemittel zwischen Unterwerkzeug und ggf. ändernden Oberwerkezeigen in mehreren Schritten unter Erhalt eines Schichtaufbaus durchgeführt.

Die so hergestellten Schichten können unterschiedliche Materialzusammensetzung haben.

Somit kann der erfindungsgemäße Ladungsträger im Wesentlichen aus einem Komposit Material hergestellt sein, das verschiedenste Reststoffe umfasst. Unter Reststoffen werden auch komplexe Verbund-Materialien, wie weggeworfene Getränkekartons, Coffee to Go-Becher, Verpackungsmaterialien mit dem eingetragenen Markennamen Tetra Pak® oder Joghurtbecher verstanden, die entsprechend klein geschreddert wurden.

Das Kompositmaterial für die erfindungsgemäßen Ladungsträger kann auch mit eher problematischen Reststoffen gemischt werden, die Bindemittelpartikel, Kunststoffreste, ggf. Metallreste enthalten.

Ein besonderer Vorteil der Erfindung besteht in ihrer Anpassbarkeit an die gerade verfügbaren Ausgangsmaterialien - sie ist keineswegs nur auf eine spezielle Materialkombination eingeschränkt, sondern kann an die vorliegenden Reststoffe entsprechend angepasst werden.

Die Herstellung der Ladungsträger erfolgt in mehreren Schritten.

Zunächst werden die Reststoffe - bspw. Getränkekartons und Becher - ungereinigt in kleine Stückchen, die nur wenige Millimeter groß sind, zu Mahlgut zermahlen.

Dieses geschredderte Mahlgut wird nun mit einem wärme- und Druck härtbaren Bindemittel vermischt, und die Mischung mit speziellen Fasern in eine hohle Werkzeugform mit Unterwerkzeug und erstem Oberwerkzeug geblasen und anschließend in mehreren Schritten mit mindestens einem weiteren Oberwerkzeug(en) zum fertigen Endprodukt gepresst.

Nachfolgend wird die Erfindung anhand eines in der beigefügten Zeichnung dargestellten Ausführungsbeispiels eines Ladungsträgers mit unterschiedlichen Dichten näher erläutert, auf das sie keinesfalls eingeschränkt ist. In dieser zeigen:
Fig. 1 eine Ansicht einer zu befüllenden Form aus einem Unterwerkzeug und einem ersten Oberwerkzeug
Fig. 2 die mit eingeblasener Materialmischung gefüllte Form mit einem ersten Oberwerkzeug
Fig.3 eine Ansicht des mittels eines zweiten geschlossenen Oberwerkzeugs gepressten Materials in der Form
Fig. 4 eine Ansicht eines entformten Ladungsträgers nach Fig. 3; und

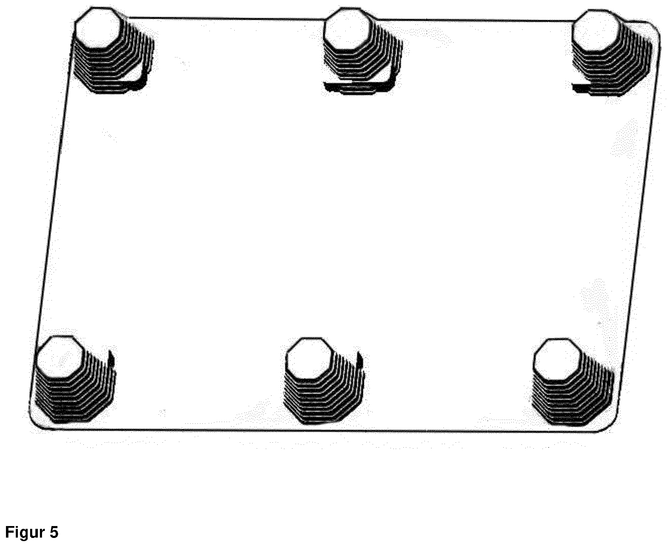

Fig. 5 eine Ansicht der Unterseite einer erfindungsgemäßen Palette.

Bei der in Fig. 1 dargestellten Form zur Herstellung eines erfindungsgemäßen Ladungsträgers weist diese ein Unterwerkzeug 1, das die Endform der Unterseite des Ladungsträgers vorgibt und ein variables Oberwerkzeug 2, 10 auf. Ein erstes Oberwerkzeug 2 wird zum Einblasen genommen und weist bei dieser Ausführungsform unterschiedliche Vertiefungen auf, die verschiedene Volumina für die Materialmischung (Fig. 2, Pos. 3) gegen das Unterwerkzeug bieten. Abweichend von der endgültigen Form der Oberseite des in Figur 4 beispielhaft dargestellten entformten Ladungsträges mit einer planen Oberfläche, wird im ersten Oberwerkzeug 2 in bestimmten Bereichen mit höherer Belastung ein größerer Einblas-Raum an der entsprechenden Werkzeugstelle vorgegeben, als der endgültigen Form des Ladungsträgers entspricht. Dadurch entsteht beim Einblasen dort eine Materialanhäufung (s. Fig. 2). Nach beendetem Einblasen wird das erste Oberwerkzeug gegen ein zweites Oberwerkzeug 10, das hier der Endform entspricht, getauscht. Das zweite Oberwerkzeug 10 wird über der so vorgeformten Materialmischung (Fig. 2, Pos. 3) geschlossen, wodurch sich unterschiedliche Dichten in der Materialmischung auf dem Unterwerkzeug 1 ausbilden und zwecks Härten des Bindemittels geheizt. Das so gebildete Formteil aus Reststoffen, Fasern und gehärtetem Bindemittel wird entformt.

Durch die Möglichkeit des mehrfachen Oberwerkzeugtauschs, ggf. mit Zwischenverfestigung - können auch Schichten unterschiedlicher Dichte bzw. unterschiedlicher Materialien in einem Formkörper produziert werden, wodurch sich völlig neue Formkörpergestaltungen ergeben. So können wasserfeste Deckschichten auf nicht wasserfesten Füllungen produziert werden, aber auch feste bis hochfeste Schichten mit leichterem Material verbunden werden.

Hinsichtlich der Details dieses Verfahrens wird vollinhaltlich auf die DE10 2019 121 222.7 der Fiber Engineering GmbH, Karlsruhe Bezug genommen.

Meist wird im ersten Schritt die Werkzeugform mit Unterwerkzeug und erstem Oberwerkzeug in der Einblasstation durch Einblasen mit der oben beschriebenen Materialmischung gefüllt. In Fig. 2 ist der vollständig gefüllte Zustand des Werkzeugs in der Einblasstation gezeigt. Deutlich ist das größere Volumen auf der linken Seite des Einblaswerkzeugs erkennbar.

Der nächste Schritt erfolgt in der Press-Station (Fig. 3). Hier wird das Material durch das zweite, ggf. beheizbare Oberwerkzeug 10 in der Heiz-Press-Station durch Heizen und Pressen verdichtet und durch Abbinden des Bindemittels verfestigt (Fig. 3), wobei die Form des zweiten Oberwerkzeugs 10.2 der endgültigen Oberseite des Ladungsträgers, hier im Beispiel eine plane Fläche, entspricht. So wird beim Pressen, angedeutet durch die Pfeile 7, die Dichte des eingefüllten Materials je nach Formabweichung des zweiten Oberwerkzeugs 10 gegenüber dem ersten Oberwerkzeug 2 erhöht. In (Fig. 3) ist dies durch einen dunkleren Bereich angedeutet, wobei ein hellerer Bereich 5 mit geringerer Verdichtung verbleib.

Das bedeutet: man kann besonders belastete Stellen (zum Beispiel die Kanten einer Palette) mit diesem Verfahren besonders stabil und massiv fertigen. Außerdem wird das Gewicht der Platten entsprechend der belasteten Bereiche optimiert.

Bei Verwendung eines bei Temperaturen von über 120°C, bevorzugt über 170°C abbinden-den Binde-mittels werden organische Mikroorganismen, wie Bakterien abgetötet, die sich möglicherweise in ungewaschenen Reststoffen befinden. So wird auch eine mögliche Geruchsbelastung stark reduziert. Es können auch Abbinde Fördermittel, wie Heißdampf oder heiße dampfförmige Abbinde Hilfsmittel in die Form eingeblasen werden, um die Bindemittelaktivierung zu verbessern.

Bei Bedarf können im Prozess zusätzlich Additive zur Materialmischung beifügt werden, um spezielle Produkteigenschaften zu erhalten. So kann zum Beispiel die Wasserfestigkeit erheblich gesteigert werden, wenn man bestimmte Wachse oder wasserfestes Material hinzufügt. Je nach Bindemittel kann auch die Brandfestigkeit erhöht werden (Bindemittel auf Silicium Basis). Es können auch vollständig kompostierbare Ladungsträger aus natürlichen Fasern, natürlichen wärmehärtenden Bindemitteln (Stärke, Chitin, Silikate, Gummi und Harze) und natürlichen Füllstoffen, wie Cellulose, Holzschliff und Holzresten, Pflanzenresten wie Stroh, Grashalmen, Baumwolle, Kapok, Kokosfasern, auch wie sie bei der Bearbeitung der Fasern zu Garnen, Fasern und Textilien anfallen u. dgl. hergestellt werden.

Im letzten Schritt, einer Kühlstation, darf das Material auf Normaltemperatur abkühlen oder wird aktiv auf Normaltemperatur heruntergekühlt. Nach Abkühlen und Aushärten (Fig. 4) wird der gebundene Ladungsträger aus der Presse herausgenommen. Nacharbeiten - zum Beispiel ein Entgraten der Ränder - ist in der Regel nicht notwendig.

Während die Erfindung detailliert anhand bevorzugter Ausführungsformen beschrieben wurde, ist dem Fachmann ersichtlich, dass verschiedenste Alternativen und Ausführungs-formen zur Durchführung der Erfindung im Rahmen des Schutzumfangs der Ansprüche möglich sind.

### Bezugszeichenliste

- 1:: Unterwerkzeug der Einblasstation
- 2:: erstes Oberwerkzeug der Einblasstation
- 3:: Mischung
- 4:: Material stärker verdichtet
- 5:: Material weniger stark verdichtet
- 7:: Presskraft
- 10:: zweites Oberwerkzeug zum Pressen/Heizen

## Patentansprüche

**1.** Ladungsträger, der im wesentlichen Kompositmaterial mit Reststoffen, härtbarem Bindemittel und ggf. Fasern aufweist, erhältlich durch Herstellung einer Mischung (Fig. 2, Pos. 3) von Reststoffen, Bindemittelpartikeln und gegebenenfalls Fasern in einem Mischer und Einbringen der so hergestellten Mischung (Fig. 2, Pos. 3) in eine mehrteilige geschlossene Form (Fig. 1 und Fig. 2, Pos 1 und 2) mit einem Unterwerkzeug (Fig. 1 und Fig. 2 und Fig. 3 , Pos. 1) und mindestens einem Oberwerkzeug (Fig. 1 und Fig. 2 , Pos. 2) und Härten der Mischung (Fig. 2, Pos. 3) in der geschlossenen Form (Fig. 1 und Fig. 2, Pos 1 und 2) durch Erwärmen und/oder Pressen unter Härten des Bindemittels unter Verbinden der Mischungsbestandteile, Abkühlenlassen und Entformen des Komposit-Ladungsträgers.

**2.** Ladungsträger nach Anspruch 1 , **dadurch gekennzeichnet, dass** der Ladungsträger aus Paletten (Fig. 5), Kistenbestandteilen und Traghilfen ausgewählt ist.

**3.** Ladungsträger nach einem der vorangehenden Ansprüche, **dadurch gekennzeichnet, dass** die Form mehrere wechselbare Oberwerkzeuge (Fig. 1 und Fig. 2 und Fig. 3, Pos 2 und 10) und ein Endform-Unterwerkzeug (Fig. 1 und Fig. 2 und Fig. 3 , Pos. 1) sowie mindestens eine Einblasöffnung aufweist..

**4.** Ladungsträger nach einem der vorangehenden Ansprüche, **dadurch gekennzeichnet, dass** er verschiedene Materialdichten aufweist, herstellbar durch Einbringen der zu härtenden Mischung (Fig. 2, Pos. 3)in die Form mit dem Unterwerkzeug (Fig. 1 und Fig. 2 und Fig. 3 , Pos. 1) und einem ersten Oberwerkzeug (Fig. 1 und Fig. 2 , Pos. 2), das ein erhöhtes Volumen für eine Materialanhäufung entsprechend dem vorherbestimmten-Muster nach zu erreichendem Verdichtungsgrad im Endformteil besitzt und Wechseln des Oberwerkzeugs zu einem Oberwerkzeug (Fig. 3, Pos 10) mit Endformkontur und Pressen der Mischung (Fig. 2, Pos. 3) durch das weitere Oberwerkzeug (Fig. 3, Pos 10) und Aushärten der so geformten Mischung (Fig. 2, Pos. 3).

**5.** Ladungsträger nach einem der vorangehenden Ansprüche, bei dem die Reststoffe des Ladungsträgers Naturreststoffe wie Zellulose, Naturfasern, Holzpartikel, Gräserreste, Schnitzel aus Verbund-Verpackungsmaterialien; Papierreste, Kunststoffreste, auch Altpapierreste, aufweisen.

**7.** Ladungsträger nach einem der vorangehenden Ansprüche, **dadurch gekennzeichnet, dass** das druck - und wärmehärtbare Bindemittel des Ladungsträgers ausgewählt ist aus Duroplasten, Zweikomponenten Bindemitteln und natürlichen Bindemitteln, wie Stärke, Eiweiß, Chitin, Harze, Gummi und Silicium Abkömmlinge, wie Silikate und Silikone.

**8.** Verfahren zum Herstellen eines Ladungsträgers nach einem der vorangehenden Ansprüche, **gekennzeichnet durch**: Einbringen von Bindemittel und zerkleinerten Reststoffen sowie ggf. Fasern in eine mehrteilige Form mit einem Unterwerkzeug (Fig. 1 und Fig. 2 und Fig. 3 , Pos. 1) und einem wechselbaren erstem Oberwerkzeug (Fig. 1 und Fig. 2 , Pos. 2);
Wechsel des Oberwerkzeugs gegen ein Endform-Oberwerkzeug und
Schließen der Form unter Ausübung von Druck auf die Materialmischung (Fig. 2, Pos. 3)auf dem befüllten Unterwerkzeug (Fig. 1 und Fig. 2 und Fig. 3 , Pos. 1) und ggf. unter zusätzlichem Erwärmen der Form unter Aushärten des Bindemittels und Verbinden der Bestandteile der Mischung (Fig. 2, Pos. 3), ggf. Abkühlen und Entformen des Ladungsträgers.

**9.** Verfahren nach Anspruch 8, **dadurch gekennzeichnet, dass** das Einbringen der Mischung (Fig. 2, Pos. 3) zwischen Unterwerkzeug und. ggf. verschiedenen Oberwerkzeugen in mehreren Schritten unter Erhalt eines Schichtaufbaus erfolgt.

**10.** Verfahren nach Anspruch 9, **dadurch gekennzeichnet, dass** die Schichten unterschiedliche Zusammensetzung haben.
